# EUROPEAN PATENT APPLICATION

(11) **EP 3 647 940 A1**
(43) Date of publication of application: **06.05.2020**
(21) Application number: 18204179.8
(22) Date of filing: 02.11.2018
(51) Int. Cl.: G06F 8/38

(54) **METHOD, COMPUTING DEVICE AND PROGRAM CODE FOR FACILITATING INFORMATION DISPLAY ON A DISPLAY**

(71) Applicant: Schneiter, Sorin, 1040 Echallens (CH)
(72) Inventor: Schneiter, Sorin, 1040 Echallens (CH)
(74) Representative: Omnis-IP

(57) **Abstract**

The present invention concerns a computing device, a software application, a program code and/or a method for rendering the contents of a foreground window displayed on a screen at least partially transparent, so as render visible the contents in the background of the foreground window displayed on the screen.

## Description

### Technical Field

The present invention relates to information technology, and more specifically to methods, systems and software configured to display graphical elements and/or information by way of icons and/or windows on a display or screen. The invention relates in particular to such methods, systems and software that are rendering certain information rapidly visible following a user command.

### Background Art and Problems Solved by the Invention

Many computing device systems run an operating system that allows multiple viewing areas as part of a graphical user interface. Such viewing areas, typically referred to as windows, first came into general use as part of the Apple Macintosh. Later, Microsoft made the idea the foundation of its Windows operating system, which was actually a graphical user interface for the Disk Operating System (DOS) on IBM-compatible PCs.

The windows-based display of information provides various advantages: a window can usually be resized by the user. For example, it can be stretched on any side, minimized, maximized, and closed. On today's multitasking operating systems, you can have a number of windows on your screen at the same time, interacting with each whenever you choose.

On screens of typical Windows or Apple computing devices, it is possible to run different programs at the same time, and also to have several files of the same software application or of different software applications open at the same time. It is also possible to arrange different views of a same file. This is of assistance to persons performing tasks with such computing devices, because in many instances, it is of use to have access to information contained in different or the same files of the same or different software applications. For example, it is possible to have separate windows of a portable document format (pdf) file open (and view the contents of the file), while at the same time working on a word processing program. The user may thus view information of one document while working on another document, or may work on a document while viewing, in a separate window, information contained at a different position of a document.

Given the many possibilities provided by the windows type information display on a screen, the space provided by the screen becomes the limiting factor. Persons having reduced visual faculty require the information to be displayed largely, for example texts displayed with large font sizes. It is thus not of much help, if windows containing the required information are size-reduced and dragged-and dropped (or rearranged on the screen) so as to be visible simultaneously. Some persons work with small screens, which may be a consequence of the on-going miniaturization of laptop computing devices. For many professional or other complex performances, persons may branch a plurality of screens to the same computing devices, so as to be able to have adequate-sized windows of one or more file-type visible at the same time. However, it is not always possible to accommodate two screens, and, furthermore, the number of screens required to display information may be larger than two. No matter how many screens are simultaneously in use, one may always wish to have one or more additional information being visible.

It is noted that many systems are based on small and even very small screens. For example, smart phones and tablets generally have touchscreens that are relatively small. Furthermore, smart watches have a very small screen. This illustrates further the need of improving the utilization of the surface provided by a screen in order to render information visible.

An objective of the present invention is to address the need of rendering more information visible simultaneously on a display.

### Summary of the Invention

Remarkably, the present inventor has provided a computing device, a software application and/or a method for rendering at least part of an icon and/or window displayed on a screen at least partially transparent, so as render visible the graphical elements and/or information that is covered by said icon and/or window and/or that is behind said icon and/or window.

In an aspect, the invention provides a method of enabling visualisation of graphical elements and/or information on a screen, wherein said screen is part of and/or connected to a computing device configured to run software applications and to display information accessible to said software applications in icons and/or windows appearing on said screen, wherein said method comprises a program code is configured to render at least parts of an icon and/or window transparent or at least partially transparent with respect to graphical elements and/or information contained behind said icon and/or window, and/or covered by said icon and/or window on said screen, thereby rendering said graphical elements and/or information visible through said icon and/or window.

In an aspect, the invention provides a software code and/or thread configured to run on a computing device configured to display graphical elements and/or information in icons and/or windows appearing on a screen, wherein said program code is configured to render at least parts of an icon and/or window transparent or at least partially transparent with respect to graphical elements and/or information contained behind said icon and/or window, and/or covered by said icon and/or window on said screen, thereby rendering said graphical elements and/or information visible through said icon and/or window.

In an aspect, the invention provides a computing device and/or a computer system configured to run software applications and to display information accessible to said software applications in an icons and/or window appearing on a screen, wherein said computing device comprises and/or stores a program code is configured to render at least parts of an icon and/or window transparent or at least partially transparent with respect to graphical elements and/or information contained behind said icon and/or window, and/or covered by said icon and/or window on said screen, thereby rendering said graphical elements and/or information visible through said icon and/or window.

In an aspect, the invention provides a software application configured to be run on a computing device configured to display information accessible to said software applications in an icon and/or window appearing on said screen, wherein said software application is configured to run, activate and/or disactivate, preferably via a user input, the software code and/or thread of the invention.

In an aspect, the invention provides a software code or thread configured to run on a computing device configured to display graphical elements and/or information in windows appearing on a screen, wherein said software code and/or thread is configured to be activated and/or disactivated by a user, wherein said program code is configured to render at least parts of a foreground window transparent or at least partially transparent with respect to graphical elements and/or information contained behind said foreground window, and/or covered by said foreground window on said screen, thereby rendering said graphical elements and/or information visible through said foreground window.

In further aspects, the invention provides a method of enabling visualisation of graphical elements and/or information on a screen 10 comprising providing the software code or thread of the invention, a computing device configured to run said software code and/or thread, and an application software configured to run and/or to enable the activation and/or deactivation of said software code and/or thread.

In other aspects, the invention relates to methods, computer codes, software applications and/or computing devices configured to enabling the increase of the amount of graphical elements and/or information that is visualized on a screen by rendering at least part of an icon and/or window displayed on a screen at least partially transparent in accordance with the invention, so as render visible the graphical elements and/or information that is covered by said icon and/or window and/or that is behind said icon and/or window on said screen.

Further aspects and preferred embodiments of the invention are defined and described herein below and in the appended claims.

Further features and advantages of the invention will become apparent to the skilled person from the description of the preferred embodiments given below, which illustrate the invention without limiting its scope.

### Brief Description of the Drawings

The following figures are used to illustrate embodiments of the present invention. The invention is not intended to be limited to the embodiments shown in the drawings.
**Figure 1** illustrates a computing system connected to a screen and to an input unit in accordance with an embodiment of the invention.
**Figure 2** shows a monitor comprising a screen operating in accordance with the prior art.
**Figure 3** shows a monitor comprising a screen displaying windows operating in accordance with an embodiment of the present invention.
**Figure 4** shows a monitor comprising a screen displaying windows and operating in accordance with another embodiment of the present invention.
**Figures 5A**, **5B** and **5C** shows an embodiment of a graphical menu button for displaying on the window of a software application, which button enables a user to activate software codes in accordance with an embodiment of the invention.
**Figure 6** shows a second embodiment of a menu bar or button for displaying on the window of a software application, which button enables a user to activate software codes in accordance with an embodiment of the invention.
**Figure 7** shows a monitor comprising a screen displaying windows and operating in accordance with another embodiment of the present invention.
**Figure 8** shows a monitor comprising a screen displaying windows and operating in accordance with yet another embodiment of the present invention.

### Detailed Description of the Preferred Embodiments

In some embodiments, the present invention relates to computer codes enabling the visualization of graphical elements and/or information on a screen, in particular graphical elements and/or information that is covered by an icon and/or window.

For the purpose of the present specification, an "icon" is a pictogram or ideogram displayed on a computer screen in order to help the user navigate a computer system. Preferably, icons and/or windows are parts of the GUI of the computer system, such as the computing device.

In an embodiment, the invention may be applied in a windowing system. In an embodiment, said icon and/or window is a window, preferably a foreground and/or active window.

In an embodiment, the invention relates to computer codes for enabling the visualization of graphical elements and/or information contained on a background that is at least partially covered by an icon and/or window, for example that is at least partially covered by a foreground window. The invention also relates to computing devices comprising or configured to run such computer codes, to software applications comprising or configured to run such computer codes.

Regarding the computer threads and/or codes and/or the software applications of the present invention, the invention specifically also encompasses a computer readable medium containing the computer threads and/or codes and/or the software applications. Such computer readable medium may be any kind of memory, such as RAM, ROM, flash memory, USB stick, volatile data storage medium, non-volatile data storage medium, a hard disk, computer readable CD, DVD and so forth.

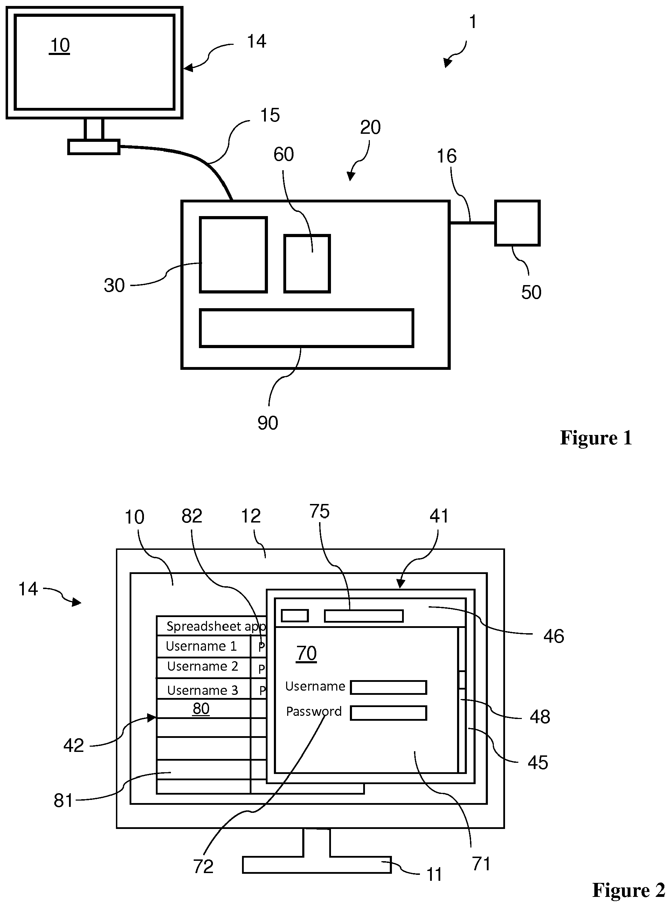

**Figure 1** shows a computer system 1 comprising an exemplary computing device 20 that is suitable for the purposes of the present invention. The computing device 20 may be a desktop computer. The device 20 is connected via a connection 15 to a monitor 14 comprising a screen or display 10. Furthermore, the computing device 20 is connected via connection 16 to an input unit 50 that enables a user to start software applications and/or to start computer codes or threads. The input unit 50 may be a mouse or a keyboard, for example.

For the purpose of the present specification, the "user" is preferably the person using the software applications 30 provided on said computing device 20, typically and end user or consumer who purchases the computing device and/or software application for private and/or professional use. Preferably, the "user" is not intended to be a programmer writing computer programs of software applications and/or programming said computer code or thread 60.

Connections 15 and 16 may, independently, be selected from cable connection or wireless connections, for example.

While a desktop computer is cited as an exemplary computing device 20, the invention is not limited to any particular computing device. In particular, the computing device may be selected from any computing device capable of executing software and/or firmware.

Preferably, the computing device 20 is, comprises or is based on a windows type operating system, configured to interact with a user via a screen 10 that displays contents related to software applications, files, data, folders, and so forth, on windows appearing on the screen when a software application is started.

Preferably, the computing device 20 comprises and/or is configured to run a graphical user interface (GUI). The GUI is a form of user interface that allows users to interact with electronic devices through graphical icons and visual indicators such as secondary notation, instead of text-based user interfaces, typed command labels or text navigation.

The actions in a GUI are usually performed through direct manipulation of the graphical elements by a user.

Typically, users interact with information by manipulating visual widgets that allow for interactions appropriate to the kind of data they hold. The widgets of a well-designed interface are selected to support the actions necessary to achieve the goals of users. A model-view-controller allows flexible structures in which the interface is independent from and indirectly linked to application functions, so the GUI can be customized easily.

Large widgets are also referred to as "windows". Windows usually provide a frame or container for the main presentation content such as a web page, email message, word processing document, portable document file (pdf) or drawing, for example.

A "window" is a graphical control element. It generally consists of a visual area containing some of the GUI of the program it belongs to and is generally framed by a window decoration. It usually has a rectangular shape that can overlap with the area of other windows. It displays the output of and may allow input to one or more processes.

Windows are primarily associated with graphical displays, where they can be manipulated with a pointer by employing some kind of pointing device, for example commanded by a mouse. Text-only displays can also support windowing, as a way to maintain multiple independent display areas, such as multiple buffers in Emacs. Text windows are usually controlled by keyboard, though some also respond to the mouse.

In a preferred embodiment, the invention is provided in a "windowing system", which means in a system containing software that manages separately different parts of display screens.

In a preferred embodiment, the windowing system is or comprises a GUI which implements the WIMP (windows, icons, menus, pointer) paradigm for a user interface. Preferably, the windowing system uses thus these elements for interacting with the user.

In a preferred embodiment, the expression a "computing device configured to run software applications and to display information accessible to said software applications in windows appearing on said screen" refers to computing devices running a windowing system software, more preferably a GUI which implements the WIMP paradigm for a user interface.

Well-known windows type operating system and computers are the various windows operating systems of Microsoft Corporation, Redmond, Washington and the iOS of Apple Inc., Cupertino, California.

Besides a desktop computer, the computing device 20 may be selected, for example, from the group consisting of computers in general, laptop computers, computer tablets, smartphones, computer servers, industrial computers, and so forth. In smartphones, tablets and certain laptop computers, touchscreens may be used as screens and at the same time as input devices 50.

The computing device 20 comprises software stored on the computing and configured to be run or executed on the computing device, such as an operating system 90, and one or more software applications 30.

It is noted that hardware components of the computing device 20 are not shown. Such hardware components may comprise, for example, one or more types of memory (RAM, ROM, etc), one or more central processing units (CPU), a mother board, one or more buses, a control unit, one or more interfaces, for example for connecting with the display 10 and/or the input unit 50, input and output devices (I/O). Hardware components other than display 10 and input device 50 are not shown in Fig. 1. It is noted that said display 10 and/or input device 50 may be physically integrated into a single computing device 20, such as in a laptop computer, for example.

**Figure 2** illustrates a typical state of the art manner of interacting with a user via a windows-type operating system. For illustration, the screen 10 is shown to be part of a flat screen monitor 14 comprising a monitor frame 12 and a base or stand 11.

On the screen 10 one can see windows 41, 42 displayed, with which are associated with different software applications 30 with which a user is working. The window 41 seen as a whole in the foreground is the foreground window 41 and active window. In the example shown, it is a web-browser window, with which the computing device 20 is connected to the internet. Known web-browser software applications include MS Explorer, Google Chrome, Apple Safari, Firefox, and so forth, which is shown here as an exemplary software application 30.

Typically, the windows 41, 42 shown comprise a "window decoration" encompassing the window frame, the window border, the title bar, menu bar, status bar, and control elements particular to the software application.

The "control elements" include elements of interaction with a user, such as buttons, such as radio buttons, check boxes, split buttons, and cycle buttons, sliders, list boxes, spinners, drop down lists, menus, such as drop-down and pie menus, menu bars, tool bars, ribbons, combo boxes, icons, tree views, grid views, links, tabs, scroll bars, just to mention some current control elements. Generally, the control elements are positioned on the window decoration, such as on or along the border, frame and/or bars of the window decoration.

For the purpose of the present specification, the "window content" is the part of the window that is preferably not encompassed by the "window decoration", but which is visible in the window. Preferred embodiments of "window content" are described elsewhere in this specification.

Further regarding Fig. 2, one can see, partially covered by the foreground window 41, a background window 42, which in the present case is the window created by a spreadsheet application, such as MS Excel, which is shown here as another exemplary software application 30. The computing device 20 of the invention is preferably configured to allow multitasking, that is the running of different software applications simultaneously, or to run different files of a same software application simultaneously.

In Fig. 2, the background window 42 is partially covered by the foreground window 41, and, consequently, parts of the background window 42 are not visible to a user, as they are covered by the foreground window 41.

The foreground window 41 of the web-browser is briefly described as an exemplary window of a windows-type operating system. Window decoration of the foreground and active window 41 thus comprises a window border or frame 45 and a title bar 46 with buttons. In the figure as shown, the bar 46 is shown as a mixture of a classical title bar and a classical menu bar.

In the case of a web-browser application, an input tex box 75 is provided, allowing the user to enter the address of an Internet or web page, for example. The decoration of the foreground window 41 also comprises a vertical scroll bar 48, and may of course also comprise a horizontal scroll bar (not shown). Further typical features of window decorations that are not shown may of course be present.

Reference numeral 70 indicates the window contents that are not part of the window decoration and that are thus not related to the software application (here web-browser) as such, but which are the contents of the file that is presented in the window. In the case of a web-browser, the contents of an htm or html file may be displayed in the window 41, for example. For the purpose of the present specification, the window contents 70 of the foreground window 41 may be distinguished, for example, as background content 71 and information relevant content 72. The background content 71, such as a uniformly colored background surface, generally has to purpose of allowing convenient visibility of the information relevant content 72, or at least of not interfering with said information relevant content 72.

In the example shown in Fig. 2, the web-browser is on a log-in site of, for example, an online shop, a website of an airline, of a financial institution or any other type of on-line service or offer using or requiring a user identification, such as a username and a password, allowing the user to access to his or her user account. The entry box where the user can enter text, as well as the text indicating to the user what type of entry is required ("Username", "Password") are considered as information relevant content 72. Without the proper visualization of this content, it would not be possible to use the window and in this case, to log in to the website.

Further regarding the example illustrated in Fig. 2, the background window 42 is a spreadsheet application that the user runs to store his or her username and passwords for loging in to various websites (assuming the user does not like to use the login storing function contained in most web-browsers). As with the foreground window 41, the background window contains information relevant content 82 and information irrelevant content 81. For reasons of convenience, the window decoration of the background window 41, such as the window border and the like, is not shown in detail, knowing that spreadsheet applications generally also display a window decoration.

Now, in the disposition as shown in Fig. 2, possibly due to a small size of the screen 10, some of the information relevant content 82 of the background window 42 is not visible to the user, because it is covered by the foreground window 41. In the example shown, the passwords associated with various usernames are not visible. Therefore, in order to be able to learn the appropriate password and to enter it into the relevant entry of window 42, the user has to conduct the following steps: (1) activate the background window 42 such that the latter becomes the foreground and active window, (2) visualize and memorize or copy the information (here the password), (3) activate window 41 such that the latter becomes again the foreground and active window, and (4) use the information in window 41, here enter the username and/or the password. While these steps (1)-(4) may be acceptable if there is just one particular information required, it is very cumbersome if several information have to be entered.

As an example where one has to enter not just one information but several data contained in a separate window, one may imagine entering personal data in an on-line VISA application form, where one has to enter contents of the passport (passport number, issue date, issue place, expiry date, and so forth) and a scan of the passport is displayed in a (background) window on the screen that is hidden by the web-browser.

More generally, Fig. 2 illustrates the situation where a user requires and/or works with information contained in different windows and where the contents of one window are at least partially covered by another window. The different windows 41, 42, may relate to different files of the same software application, different files of different software applications, or also different positions within a single file of a software application, for example split windows showing different section of a large text or word file, for example. Of course, the problem may be solved, for example, by using a large screen or even by using several screens. However, this possibility is not always available and consumes additional space. On may also envisage arranging the two windows one next to each other, so as to avoid information being hidden through overlapping windows. However, in this case the windows have to be size-reduced and the contents may thus no longer displayed in sufficient size to be easily visible to the user, or if a large display size is chosen, it may not be possible to display all information in a window as displayed, making it necessary to use the scrolling function so as to render information visible stepwise.

In an embodiment, the invention provides a software code or thread 60 configured to rendering at least part of an icon and/or window 41 displayed on a screen at least partially transparent, so as render visible graphical elements and/or information 42, which are covered by said icon and/or window 41.

For the purpose of the present specification, the expression "graphical elements and/or information" encompasses contents, such as window contents, window decorations, widgets, pointers, cursers, files and/or folders, other icons and/or other windows, such as background windows, and menus, for example.

In an embodiment, the invention provides a software code or thread 60 configured to render visible, through said icon and/or window 41, graphical elements and/or information 42 that are covered by and/or behind said icon and/or window 41. In other words, said program code 60 is configured to render said graphical elements and/or information 80, 82 contained behind said foreground window 41 visible through said foreground window 41.

For the purpose of clarification, it is mentioned that the expressions "covered by", for example in larger expressions such as "covered by said icon and/or screen", and "behind said window", and the like, do not intend to necessarily mean that an icon, window or graphical element is indeed physically covered or placed behind said icon and/or window 41. These expressions refer to the situation that graphical elements, such as icons and windows, are seemingly arranged or ordered so as to appear, to the user using a screen 10, to be positioned behind or covered by said icon and/or window 41. Indeed, the computing device comprises software that is suitable to create the impression or illusion as if a graphical element, such as a window, is provided *behind* an icon and/or window. The computing device may employ an ordering system which allows the computing device to maintain said impression. For example, a windows manager software may be suitable to provide the impression of the order related to "covered by", "behind", and the like.

In an embodiment, the invention provides a software code or thread 60 configured to render at least part of a foreground window 41 displayed on a screen at least partially transparent, so as render visible graphical elements and/or information on the screen, for example on a desktop of the screen, but which are behind and/or covered by said foreground window 41.

In an embodiment, graphical elements and/or information is associated with a background window, such as the decoration and/or the window contents of a background window 42.

In an embodiment, the invention provides a software code or thread 60 configured to render visible, through a foreground and/or active window 41, at least parts of graphical elements and/or information 42 that are at least partially behind and/or covered by said foreground window 41.

In an embodiment, said program code 60 is configured to modify window contents 70, 71, 70' displayed in said foreground window 41 on said screen 10 in such a manner so as to render at least part of said window contents 70 transparent or at least partially transparent with respect to said graphical elements and/or information 80, 82 contained behind said foreground window 41.

In an embodiment, said program code 60 is configured to modify the window decoration and/or the window contents 70 of a foreground window 41 so as to render at least part of the foreground window 41 transparent with respect to at least part of graphical elements and/or information 80, 82 contained behind said foreground window 41.

In an embodiment, said graphical elements and/or information 80, 82 are window contents 80 contained in or displayable by a background window 42, and wherein said program code 60 is configured to render said window content 80 of said background window 42 visible through at least part of said foreground window 41.

In another embodiment, the said graphical elements and/or information 80, 82 comprise at least part of the window decoration 46.2, 185 of a background window 42, 142, and wherein said program code 60 is configured to render said window decoration 46.2, 185 of said background window 42 visible through at least part of said foreground window 41.

In an embodiment, the invention provides a software code or thread 60 configured to render at least part of a foreground window 41 displayed on a screen at least partially transparent with respect to at least part of the part of a background window 42 that is covered by said foreground window 41.

For the purpose of the present invention, the manner of rendering certain parts shown on the screen at least partially transparent, in particular parts or all of a foreground window, may also be referred to in this specification as the "transparency feature". Preferably, the transparency feature is provided, enabled or caused by said program code or thread 60, when it is activated. Preferably, said "transparency feature" is configured to be activated by a user using the screen 10, for example the user using a computing device.

In an embodiment, the invention provides a program code or thread 60 that is configured to be activated and/or disactivated by a user, for example using an input device 50. Preferably, the input device 50 is part of and/or connected to said computing device 10. Said connection may be a cabled connexion and/or a wireless connection.

In Fig. 1, the program code or thread 60 in accordance with the invention is shown to be separate from the application software 30 in the computing device 20. The code or thread 30 could be integrated in (or part of) the application software 30, could be part of the operating system 90 or could be part of other software, middleware, and the like, of the computing system 20.

Certain windows-type operating systems comprise a windows manager, which may be a system software that that controls the placement and appearance of windows within a windowing system in a graphical user interface. In an embodiment, said program code 60 is contained in and/or managed by said window manager software.

For the purpose of the present specification, the term "window contents" for example as used in the expression "window contents displayed in said ... window", encompasses and/or refers to the file specific contents, which content is preferably not related to particulars of the software application. For example, the "window contents" preferably does not refer to the "window decoration".

In an embodiment, the term "window contents" refers to the contents that varies depending on the particular file (word, text, pdf, image, spreadsheet, data, power point, htm, html, etc) that is opened and not to the contents that is not varied depending on the particular file that is opened. Therefore, in an embodiment, the term "window contents" does preferably not refer to the presentation of the window and menus that remains constant independent of a particular file that is opened ("window decoration"). This definition does not exclude variability of the window decoration due to user customization, nor does it exclude the possibility of the invention of rendering at least partially transparent part or all of the window decoration.

The term "window content" generally refers to file specific data and contents. For the purpose of the present specification, the "window contents" may also be understood as user specific contents, because the file is generally created on or behalf of a user, and the contents thus depend on the input (text, graphics, data, numerical data, images) provided or created by the user.

Typically, the "information accessible to said software applications" refers to information, data, written text, graphs, pictures, art, and the like, that is presented in the window content.

The present invention preferably relates to methods conducted by the program code or thread 60, to computing devices 20 comprising the program code or thread 60, and to software applications comprising the program code or thread 60 or configured to activate, disactivate and/or run the computer code or thread, for example by calling the program code or thread 60, and to the computer code or thread 60 as such.

In an embodiment, the program code or thread 60 uses or is configured to analyse the contents of a graphical element, such as an icon and/or window, and to generate a distinction and/or classify based on the information relevance of said contents.

In an embodiment, the program code or thread 60 is configured to generate a distinction between content that has comparatively less information relevance 71, 71', 81, and content that has comparatively more information relevant content 72, 82.

In an embodiment, said program code or thread 60 is configured to use and/or provide a ranking based on an information content relevance. The ranking may be established with respect to any contents and/or graphical element, such as window contents, contents of the window decoration, and/or of icons, menus and/or other graphical elements contained in a foreground window, background window, or on a screen background, such as on a desktop shown by the screen.

The ranking and/or distinction related to information content relevance preferably allows the code 60, device 20, and/or application 30 to distinguish at least between "comparatively more relevant content" and "comparatively less relevant content".

In an embodiment, the program code 60 is configured to divide the content of a graphical element, such as a window, in two sorts of contents: (1) "information relevant content" and (2) "information irrelevant content". The "information irrelevant content" is such a specific embodiment of "comparatively less relevant content", and the "information relevant content" is an embodiment of the "comparatively more relevant content". In this case, the ranking may classify the content in just two categories.

Alternatively, the invention envisages a gradual ranking and/or or a discrete ranking with more than two levels of information relevancies.

In some embodiments, the distinction is not made by the program code 60 itself, but is provided elsewhere by the computing device and/or its system, but is preferably used by the program code 60.

"Comparatively more relevant content" may also be understood as information that is user-relevant, or information that is of primary relevance to the user, whereas "comparatively less relevant content" is content that is not of primary relevance to the user.

In an embodiment, said program code 60 is configured to selectively render transparent, partially transparent and/or more transparent content of said icon and/or window, in particular of said foreground window 41, which content is comparatively less relevant and/or which is the "information irrelevant content".

In an embodiment, said program code 60 is configured to selectively render visible through said icon and/or window 41 "information relevant content", or content that is comparatively more relevant, of said graphical elements 82 covered by said icon and/or window 41.

In an embodiment, said program code or thread 60 is configured to use and/or provide a ranking of the window content 70, 80 displayed in a window 41, 42 with respect to an information relevance of said content, allowing to distinguish at least between comparatively more relevant window content 72, 82 and comparatively less relevant window content 71, 81.

In an embodiment, said program code 60 is configured to selectively render transparent, partially transparent and/or more transparent said comparatively less relevant window content 70, 71 of said foreground window 41.

The term "more transparent" preferably means more transparent than other content, for example more transparent than said comparatively more relevant window content.

In an embodiment, said program code 60 is configured to selectively render visible through said foreground window 41 said comparatively more relevant 80, 82 that is behind said foreground window 41 and/or covered by said foreground window. This embodiment applies to situations where, for example, information relevant content is not or not only provided by a background window covered by a foreground window, but, for example, information provided the background in general, for example on the desktop shown in the windowing system.

In a preferred embodiment, said program code 60 is configured to selectively render visible through said foreground window 41 said comparatively more relevant window content 82 contained or shown to be behind said foreground window 41, preferably said comparatively more relevant content 82 of said background window 41.

Preferably, said program code 60 is configured to render more visible said comparatively more relevant window content 82 than said comparatively less relevant window content 82 of said background window 42 through said foreground window 41.

In an embodiment, said program code 60 is configured to attribute a comparatively low information relevance in said ranking to content 71, 70', 81 that is selected from:
- uniform and/or background content 71,
- non-text or non-written content 71,
- content that is not related to particular information contained in or specific to a particular file displayed in said foreground window 71,
- non-information, and/or,
- graphical-effect related content 71.

Said content having a low information relevance may be window content 71, 70', 81 but may also be other graphical elements and/or information, such as the window decoration or contents not shown in a window.

In an embodiment, said program code 60 is configured to attribute a comparatively high information relevance in said ranking to content 72, 82 that is selected from:
- text or written content 82,
- content that is related to particular information contained in or specific to a particular file displayed in said foreground window 82,
- information, and/or,
- non-graphical-effect related content 82.

Said content having a high information relevance may be window content 72, 82 but may also be other graphical elements and/or information, such as the window decoration or contents not shown in a window.

In an embodiment, window components other than the window content 70, in particular the window decoration, are not part of the content that is rendered transparent by the program code or thread 60.

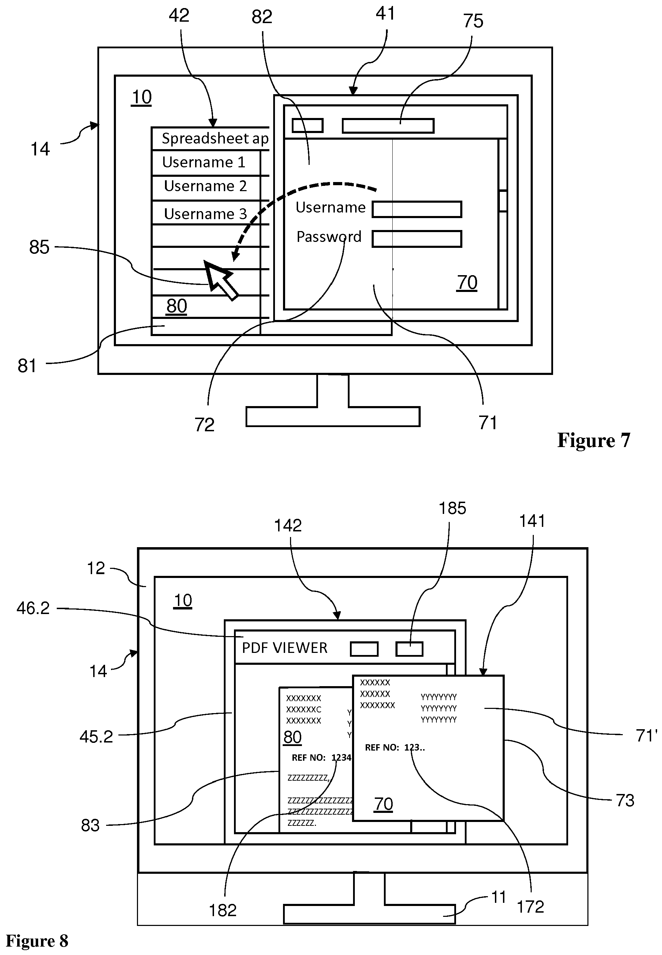

In another embodiment, the at least part of the window decoration of the foreground window 41, are also part of the content that can be rendered transparent by the program code or thread 60. In yet another embodiment, the window decoration of the foreground window 41 that are not related to the content 70 or even to the file 73 shown as window contents are rendered transparent (see Fig. 8).

In an embodiment, said program code 60 is configured to selectively render transparent or partially transparent said comparatively less relevant window content 71, 70' (or said information irrelevant content) of said foreground window 41.

In an embodiment, said program code 60 is configured to selectively render visible through said foreground window 41 said comparatively more relevant window content 82 (or said information relevant content) of said background window 41.

In an embodiment, said program code 60 is configured to selectively render said foreground window 41 transparent with respect to said comparatively more relevant content 82 of said background window 41.

In another embodiment, the program code or thread 60 may not or not only rely on an information relevance ranking, but may rely on colors or color types. For example, in the foreground window, graphical elements or contents in bright colors, white color, pastel colors and the like, which are typically used in backgrounds and information irrelevant contents, may be selectively rendered transparent compared to comparatively darker colors, such as black, dark brown, dark red, dark green, etc.. In most cases, this may result in the same overall technical effect of rendering information relevant contents visible, since such information relevant contents (text, numerical data, etc) are typically displayed in a dark color on a brighter colored background.

Likewise (or alternatively), the foreground window (and/or its contents) may be selectively rendered transparent with respect to graphical elements or contents of a dark color contained in the background window.

In some embodiment, the "comparatively more relevant content" includes written information, such as text and/or numbers, whereas the "comparatively less relevant content" includes the background on which said written information is shown. This may apply irrespective of whether part or all of the window content, part or all of the window decoration, or part of both, is rendered partially or totally transparent.

In an embodiment, said program code 60 is part of and/or configured to be activated and/or disactivated via a software application displaying said foreground window 41.

In an embodiment, said foreground window 41 displays (or is configured to display) one or more control elements and/or a pointer for activating and/or disactivating said program code 60.

In an embodiment, said program code 60 is part of and/or configured to be activated and/or disactivated via a control element 65, 165, 265 provided on said foreground window 41.

In an embodiment, said program code 60 is activatable by the movement of a pointer and/or cursor 85, preferably by moving the pointer 85 away from the foreground window 41, preferably so as to point to the background of said foreground window 41.

In an embodiment, said program code 60 is configured to adjust gradually a transparency level of said foreground window 41, for example of said window contents 70 of said foreground window 41. Preferably, said program code 60 is configured to let the transparency level of at least part of said foreground window 41 be adjusted gradually. In particular, the system 1, computing device 20, software application or program code 60 is configured to enable a user to choose or adjust a level of transparency, rendering the foreground window more or less transparent. This applies also specifically to the level of transparency of comparatively less content of the foreground window 41 or to the level of transparency with respect to the comparatively more relevant contents of the background window 42.

The "level of transparency" preferably refers to the extent of transparency or translucence (more or less transparent). The level of transparency may be selected such as to enable visualization of information contained in the background window through said forward window, while keeping the visibility, for example, of selected components of the foreground window contents, even if such contents are information irrelevant, such as the color of the foreground window's background, or the contours of the foreground window's data file (image, word document, pdf document, etc).

In a preferred embodiment, said program code 60 is configured to renders said foreground window 41 transparent at least to such an extent, that graphical elements and/or information 80 contained behind said foreground window 41 becomes clearly visible to the user, for example "readable" in case of written information. In other words, it is the purpose of the transparency feature to render the information visible to the user such that the user can indeed make use of the information. The transparency feature is preferably not intended to let the user simply recognize that there is some information there, but that information is blurred, fuzzy or otherwise unclear, such that the user can not make use of the information. For example, if a certain type of translucence is chosen, the graphical elements and/or information may be rendered recognizable but not necessarily usable, which would generally not be sufficient for the purpose of the present invention. It is also noted that the feature of "readability" through the transparency feature implies that the size of the information rendered visible is sufficiently large such that the user can read it. In particular, if the size of written text displayed behind a foreground window that was rendered transparent is not large enough to be read by the user, this does not mean that the transparency feature is not encompassed by the invention.

In an embodiment, the foreground window 41 remains the active window, preferably although the foreground window 41 has become at least partially transparent with respect to the background window or the part of the background window that is covered by the foreground window. This means that the user may activate control elements of the foreground window while contents of the background window become visible through the foreground window 41.

In another embodiment, the activation of a menu button or item which may be the same or different from button or item 65, 165, 265 may result in the background window 42 to become the active window.

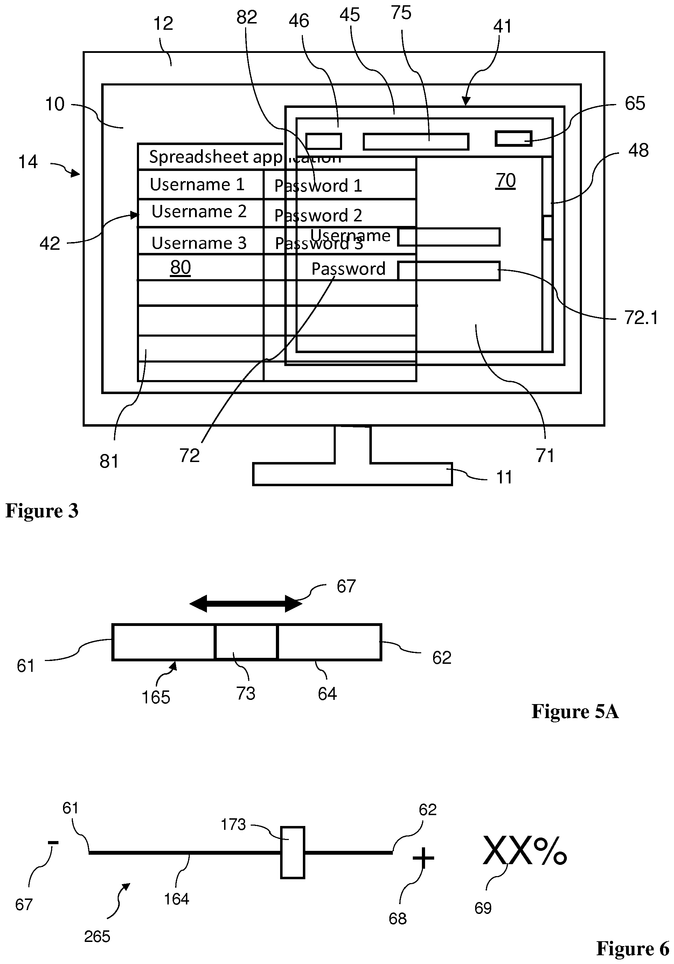

**Figure 3** is based on Figure 2, but illustrates an embodiment of the present invention. In Figs 2 and 3, identical reference numbers are used for indicating identical features. The web-browser shown in the active and foreground window 41 differs from the corresponding web-browser in Fig. 1 in that it comprises a button 65 that allows a user to activate the program code or thread 60 of the present invention. In Fig. 3, the user has already activated button 65, which means that the contents 70 of the foreground window 41 are shown to be transparent or at least partially transparent with respect to the contents 80 of the background window 42. In particular, information relevant content 82, such as the written passwords, can be seen through the contents 70 of the foreground window 41. In particular, the information irrelevant contents 71 of the file shown in foreground window 41, such as the background pattern, background image or background surface 71 on which text 72 is shown, is rendered at least partially transparent, such that text from the background window 42 is visible through the file shown the foreground window 41.

As one can recognize, thanks to rendering content of the foreground window 41 at least partially transparent with respect to contents contained in or shown in a background window 42, information becomes visually accessible and/or recognizable to the user, which information would otherwise not have been visible. In the exemplary embodiment shown in Fig. 3, the user can conveniently enter the now visible information of the background window into the appropriate text entry box 72.1 of the foreground window 41, without needing to transiently activate the background window 42 and/or without needing to place the background window to the foreground (and thus hide and disactivate the former foreground window 41).

As also shown in Fig. 3, it is preferably the information relevant content 82, such as textual or numerical data 82 of the background window 42, that is visible across the contents 70 of the foreground window 41. In particular, the information relevant content 82 is preferably visible to a larger extent than the information irrelevant content 81 of the background window 42.

Furthermore, it is preferably the information irrelevant content 71, such as the background pattern 71 of the foreground window 41 that has been rendered transparent with respect to contents 80, 81, 82 of the background window 42. In particular, the information irrelevant content 71 of the foreground window 41 is preferably rendered transparent to a larger extent than the information relevant content 72 of the foreground window 42.

Regarding the level of transparency, it is noted that, for the purpose of the present specification, an incomplete transparency is not intended to mean a translucence that allows the contents of the background window shine through the foreground window in a fuzzy, unclear manner. In such a case, the (information relevant) contents 80, 81 that become visible through the contents 70 of the foreground window 42 could not be visually recognized and could thus not been used by the user.

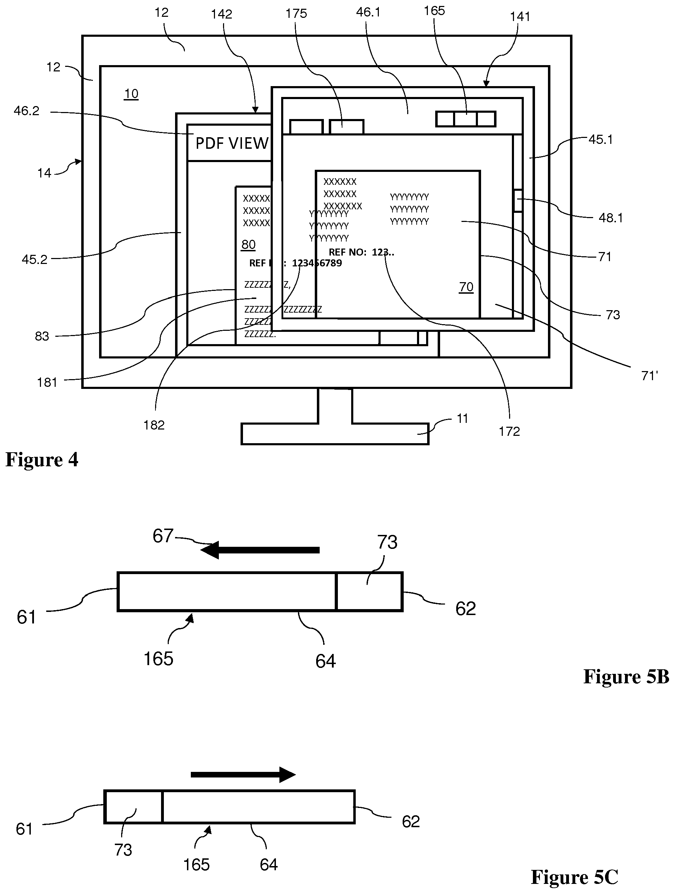

**Figure 4** illustrates an embodiment of the invention on the basis of other file types. In Fig. 4, the foreground window 141 is a word processing software displaying a text, rtf or doc-type file (doc, docx, etc) 73 on which the user is working. The foreground window 141 comprises a window border 45.1, a vertical scroll bar 48.1, and a menu bar 46.1, and menu buttons 175, for example with pull down menus.

In the example shown in Fig. 4, the document 73 is a letter, and the user is about to enter a reference number 172 into the subject line of the letter. The text of the word file 73, such as said reference number 172, is information relevant content of the file. On the other hand, the background 71 provided by the page on which the text 172 is written, as well as the background 71' on which the page is displayed against, is preferably considered as information irrelevant content 71, 71', and may thus be rendered transparent partially or totally, so as to render visible information relevant content 182 of the background window 142.

In Fig. 4, the background window 142 is a pdf viewer showing a pdf file 83, here a scanned letter. The background window 142 contains a window border 45.2 and a title bar 46.2.

The scanned letter 83 contains an address of a sender (shown as XXXXXX...) and the address of an addressee (shown as YYYYYY), besides the reference number 182. This information relevant text content is visible through the foreground window 141, and in particular through the contents 70 of the foreground window 141.

It is noted that in the word file 73 of the foreground window 141, the sender's and addressee's addresses are also shown as XXXXXX... and YYYYY... respectively. Furthermore, some text in the pdf file 84 shown as ZZZZZ... in Fig. 4 is also visible through the contents of the foreground window 141.

The title or menu bar 46.1 of the foreground window 141 contains a swipe bar 165, which can be activated by a user for rendering the foreground window 141 and in particular certain contents 70 shown in the foreground window 141 at least partially or totally transparent. The swipe bar or button 165 is discussed in more detail with reference to Figs 6A-6C. Furthermore, Fig. 7 shows another graphic realization of the swipe bar or button 165.

As one can understand, by activating the button 165, the user has started the program code and/or thread 60, which is configured to render at least part of the contents 70 in the foreground window 141 transparent with respect to at least part of the contents 80 of the background window 142. This applies in particular to the contents of the background window 142 that are covered by the foreground window 141 and therefore not visible on the screen.

Similar to what was described with respect to Fig. 3, the activation of button 165 in Fig. 4 preferably rendered at least partially transparent information irrelevant content 71, 71' of foreground window 141. In addition, the activation of button 165 preferably rendered the content of the foreground window 141 selectively transparent with respect to information relevant window content 182 of the background window, such as the text of the pdf file 83. The file 83 also comprises some comparatively less relevant content 181, which need not be rendered visible through said foreground window.

Thanks to the transparency feature of the foreground window 141, the reference number 182 contained in the file 83 of the background window 142 becomes visible across the foreground window 141, the latter preferably remaining the active window on which the user is working. Accordingly, the user can see said reference number 182 and can directly enter the number that is now visible into the file 73 of the foreground window 141, here the subject line of the letter which written in a word file.

As a remark, by comparing Figs 3 and 4, one may note that in Fig. 3, the border 45 of the foreground window 41 was also rendered transparent with respect to at least the information relevant content 80, 81 of the background window 42. In Fig. 4, the border 45.1 of the foreground window 141 is not rendered transparent. In the embodiment shown in Fig. 4, the window decoration of the foreground window 141, of which the border 45.1 is part, has remained non-transparent, whereas in Fig. 3 part of the window decoration of the foreground window 41 has been rendered transparent, too. The lateral window border may be generally considered as "comparatively less relevant content" in many cases.

In an embodiment, a user activatable control element 65, 165 enables a user to activate the transparency feature, in particular the program code or thread 60, that is the subject of the present invention. This control element may be of any type, such as a graphical element, a button (e.g. clickable button), a bar, a menu item, a menu line, and so forth and cited elsewhere in this specification. Preferably, the item 65, 165 may be activatable via a mouse click and/or by touching in case of a touch screen.

**Figures 5A****,** **5B** and **5C** illustrate an exemplary menu item 165 contained on a foreground window 41, 141. In this embodiment, the item 165 is shown as a swiping bar on the foreground window, which may be positioned, for example, on the title bar, status bar, menu bar, or possibly even on the window border of the foreground window.

The swiping bar 165 comprises a bar 64 on which a swiping button 73 is displayed, similar to a typical scroll bar. The bar 64 is longitudinal and thus comprises first and second extremities 61, 62. In the embodiment shown, the bar 64 is horizontally arranged, such that the extremities 61 and 62 are positioned on the left and right sides in Figs 5A-5C. By moving the pointer to the button 73 using a mouse as an input device 50 (Fig. 1), and by clicking and holding the mouse button, the user may displace the button 73 along the bar 64 in the directions indicated by arrow 67, that is between said first and second extremities 61, 62. The user may release the click button of the mouse at any position of the button 73 within the bar 64, essentially as is conventional. In the context of the present invention, the swiping button is configured to be used for allowing the user to adjust a transparency level of the foreground window 41, 141 and/or one or more of its contents 70, 71, 71'.

For example, by placing the button 73 at the extreme left position, as shown in Fig. 5C, the transparency level may be zero, such that, in this position, the part of the background window 42, 142 that is covered by the foreground window 41, 141 remains entirely invisible, for example such as shown in Fig. 2. By moving the button as described from the position shown in Fig. 5C towards the right along the arrow, the foreground window 41, 141 and/or one or more of its contents 70, 71, 71', in particular information irrelevant content 71, 71', preferably gets increasingly and continuously transparent, until a maximum level of transparency with respect to the background window 42, 142, is reached when the button 73 is placed on the rightmost position of the bar 64, as shown in Fig. 5B. Fig. 5A, where the button 73 is about in the middle of the bar 64, an intermediate level of transparency of the foreground window and/or its contents may be adjusted using this particular swiping button.

**Figure 6** shows another way of realizing a control element 265 in an icon and/or window for activating the method and/or program code 60 of the invention. The graphical item 265 shown is know from MS software applications for gradually adjusting the size of the document or file displayed within a window. The same type of control element may be used for allowing a user to gradually adjust a transparency level of the foreground window.

The button 173 in Fig. 7 is placed on a horizontal line or bar 164 having first and second extremities 61, 62, and can be displaced using the pointer and/or the mouse as is conventional, by clicking on the mouse click button and keeping the mouse click button pressed down, for example. When holding the click button pressed down, by displacing the mouse, the button 173 can be displaced towards the right or the left along the bar 164. If the input device is a touchscreen, the same button can be displaced simply by touching the button 173 for a fingertip and displacing the fingertip while it stays in contact with the touchscreen in the desired direction along bar 164.

The control element 265 shown in Fig. 6 further comprises a plus sign 68 and minus sign 67, for indicating the direction where transparency is higher or lower, respectively. In the present situation, placing the button 173 towards the plus sign at the second extremity 61 would result in increasing the transparency of the foreground window and/or its contents, for example. Finally, Fig. 6 shows a numerical indicator 69 of the transparency level, for example in percent as shown, where 100% would mean that the maximum level of adjustable transparancy of the foreground window and/or its content is achieved.

While the bar 64 or line 164 in Figs 4A-4C and 6 is shown in a horizontal orientation, it would of course also be possible to provide such elements vertically on a window, for example next to a vertical scroll bar, instead of the scroll bar or on a (vertical or horizontal) border of the window.

Furthermore, while the elements 65, 165 265 may be placed on the foreground window, one may also a context menu or any type of menu bar for activating the transparency of the foreground and/or active window.

Preferably, the control element for activating and/or disactivating the transparency feature is provided on the window decoration.

The present invention envisages activation of the partial or total transparency of the foreground window not necessarily by a control element as described above, but in general by any suitable way.

Another such possibility is illustrated in **Figure 7**. Fig. 7 shows substantially the same windows as Fig. 3, and same reference numerals have the same meaning. Fig. 8 differs from Fig. 3 in that a button 65 on the foreground window 41 for activating the transparency feature is absent. In Fig. 7, the pointer or mouse arrow 85 is shown. More specifically, the pointer is shows to have been moved by the user from the active, foreground window 41 to the background window 42, as illustrated by the curved dotted arrow in Fig. 7. Once the pointer is placed on the background window 42, the transparency feature is immediately activated, such that the foreground window 41 is shown to be at least partially transparent with respect to the background window 42. More specifically, information relevant content 82 of the background window becomes visible through the contents 70 of the foreground window 41. Preferably, the information irrelevant content 71, 70 of the foreground window has become (at least partially) transparent with respect to the information relevant content 82 of the background window 42, such that the user can see said information relevant content 82 of the background window 42 through said foreground window 41, as illustrated in Fig. 7.

In accordance with an embodiment of the invention, said program code 60 is activatable (or configured to be activated) by displacing a position indicator 85, for example a pointer or cursor, on the screen. For example, the pointer may be an arrow or other symbol indicating the position where the mouse is placed on the screen.

Preferably, said program code 60 is activatable by placing the position indicator 85 on a graphical element on the screen, such as an icon and/or background window 42, partially hidden by the foreground window 41, which graphical element is to be rendered visible through said foreground window 41. In other words, the position indicator may be positioned on that part of the graphical element 42 that is already visible, thereby rendering visible those parts of the graphical element that are normally hidden or have previously been covered by the foreground or active window 41.

For example, in the embodiment shown in Fig. 7, the cursor 85 has been placed away from a position on the foreground window 41 to a position of the background window 42 that is visible even in the absence of the transparency feature, because it is not covered by the foreground window 41. Once the cursor 85 is positioned on the not-covered and thus anyhow visible part of the background window 42, the program code 60 is activated and renders the foreground window 41 transparent compared to the background window 42.

The activation of the transparency feature by displacement of the pointer is preferably configured to take place while the foreground window 41 remains the active window and preferably remains the foreground window. Preferably, the displacement as shown in Fig. 7 is not accompanied by clicking on or otherwise activating the background window 42, since in this case the background window 42 would be activated and would move to the foreground, rendering actually the window 41 inactive and partially covered in the embodiment shown.

In yet another embodiment, the invention provides a transparency feature as described above, with the difference that not the contents of the file shown in the foreground window becomes transparent, but the part or all of the window that is not related to the file. For example, the transparency feature, may render at least partially transparent one, more or all selected from the window decoration.

By rendering transparent the window components other than the window contents (file, etc), such as parts or all of the windows decoration, the surface on the screen 10 available for displaying information becomes quite larger. In this embodiment, the program code 60 or the software application showing the window contents may provide context menus, for example activatable by a right-click on the mouse, in order to render the menu options available to the user.

**Figure 8** illustrates this later aspect and/or embodiment of the invention by way of example derived from Fig. 4, and same reference numerals have the same meaning. In Fig. 8, the user has activated the transparency feature according the embodiment, which renders transparent components of the window other that the window contents, preferably other than the file 73 of opened in the foreground window by the software application. In particular, the entire window decoration of the foreground window has been rendered transparent.

The transparency feature in Fig. 8 may be enabled to be activated by the user by any suitable way, for example by swiping the pointer away from the foreground window as illustrated in Fig. 7.

Accordingly, due to the activation of the transparency feature with respect to the foreground window 141, several or even all components of the window related to the software application have disappeared and are no longer visible in Fig. 8, thereby increasing the visible surface of the background window 142. For example, the window frame 45.1, the scroll bars 48.1, the title bar 46.1, the buttons 175 and menus on the title bar, the menu bar, the entries on the title or menu bars, and so forth, have been rendered transparent and are thus not visible in Fig. 8.

In this embodiment, the file 73 of the foreground window has not been rendered transparent, such that the entire contents 70, including the information irrelevant contents 71' of the file 73 remains visible and non-transparent with respect to the background of the foreground window 141 on the screen 10.

In this embodiment, overall file related visible information content is also increased, as one can see by comparing Figs 4 and 8. In particular, in the embodiment shown in Fig. 8, more information related to the pdf document 83 is visible around the file 73, since the window decoration for framing the file 73 has been rendered transparent. Furthermore, more components of the decoration of the background window 142 are visible, such as the title bar 46.2, and some menu buttons 185, which were not visible in Fig. 4.

While in Fig. 8, the window and its components for framing the file related information 70 has been rendered totally transparent, a partial transparency of the window components is, of course, also encompassed by the present invention.

Furthermore, In Fig. 8, the scroll bar 48.1 of the foreground window 141 shown in Fig. 4 has also been rendered transparent. The invention envisages that the scroll bars remain visible, at least to the extent that they can be activated by a user, so as to enable the user to navigate in the document 73.

In the description hereinabove, certain exemplary embodiments of the invention have been described. There are numerous other and alternative embodiments encompassed by the present invention, only a few of which are herewith set forth.

In an embodiment, the transparency feature renders visible any content, in particular information relevant content, that is immediately behind the foreground window. If a background window is absent, the foreground window may be rendered at least partially transparent so as to display on (or through) the foreground windows graphical elements present on the desktop shown by the screen 10. For example, the transparency feature may render visible files, folders, or other graphical elements that are behind the foreground window and which would be invisible without the transparency feature.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

## Claims

1. A method of enabling visualisation of graphical elements and/or information (80, 82) on a screen (10), wherein said screen is part of and/or connected to a computing device (20) configured to run software applications (30) and to display information accessible to said software applications in windows (41-42) appearing on said screen (10), wherein said method comprises:
- providing a program code or thread (60) configured to render at least parts of a foreground window (41) transparent or at least partially transparent with respect to graphical elements and/or information (80) contained behind said foreground window (41), and/or covered by said foreground window (41) on said screen, thereby rendering said graphical elements and/or information (80) visible through said foreground window (41).

2. The method of claim 1, wherein said computing device (20) is configured to run different software applications (30) simultaneously and/or to display on said screen (10) different windows (41, 42) of a same and/or of different software applications (30), and to display overlapping windows (41, 42), including a first or foreground window (41) and a second or background window (42).

3. The method of claim 1 or claim 2, wherein said program code (60) is configured to modify window contents (70) displayed in said foreground window (41) on said screen (10) in such a manner so as to render at least part of said window contents (70) transparent or at least partially transparent with respect to said graphical elements and/or information (80, 82) contained behind said foreground window (41).

4. The method of claim 3, wherein said graphical elements and/or information (80, 82) are window contents (80) contained in or displayable by a background window (42), and wherein said program code (60) is configured to render said window content (80) of said background window (42) visible through said foreground window (41).

5. The method of any one of the preceding claims, wherein said program code or thread (60) is configured to provide a ranking of the window content (70, 80) displayed in a window (41, 42) with respect to an information relevance of said content, allowing to distinguish at least between comparatively more relevant content (72, 82) and comparatively less relevant content (71, 81).

6. The method of claim 5, wherein said ranking classifies at least between two sorts of window content (70, 80), a first or relevant sort of content (72, 82) and a second or irrelevant sort of content (71, 70', 81).

7. The method of any one of claims 5 to 6, wherein said program code (60) is configured to attribute a low information relevance in said ranking to content (71, 81) that is selected from:
- uniform and/or background content (71),
- non-text or non-written content (71),
- content that is not related to particular information contained in or specific to a particular file displayed in said foreground window (71), and,
- non-information, and,
- graphical-effect related content (71).

8. The method of any one of claims 5 to 7, wherein said program code (60) is configured to attribute a high information relevance in said ranking to content (72, 82) that is selected from:
- text or written content (82),
- content that is related to particular information contained in or specific to a particular file displayed in said foreground window (82),
- information, and/or
- non-graphical-effect related content (82).

9. The method of any one of claims 5 to 8, wherein said program code (60) is configured to selectively render transparent, partially transparent and/or more transparent said comparatively less relevant window content (70, 71) of said foreground window (41).

10. The method of any one of claims 5 to 9, wherein said program code (60) is configured to selectively render visible through said foreground window (41) said comparatively more relevant window content (82) contained or shown to be behind said foreground window (41), preferably said comparatively more relevant content (82) of said background window (41), and/or to render more visible said comparatively more relevant window content (82) than said comparatively less relevant window content (82) of said background window (42) through said foreground window (41).

11. The method of any one of the preceding claims, where said program code (60) is configured to be activated and/or disactivated by a user, preferably via a software application (30) displaying said foreground window (41).

12. The method of any one of the preceding claims, where said program code (60) is part of and/or configured to be activated and/or disactivated via a control element (65, 165, 265) provided on said foreground window (41).

13. The method of any one of the preceding claims, where said program code (60) is activatable by the movement of a pointer and/or cursor (85), preferably by moving the pointer (85) away from the foreground window (41), preferably so as to point to the background of said foreground window (41).

14. The method of any one of the preceding claims, wherein said program code (60) is configured to adjust gradually a transparency level of said foreground window (41), for example of said window contents (70) of said foreground window (41).

15. A software code or thread (60) configured to run on a computing device (20) configured to display graphical elements and/or information (80, 82) in windows (41-42) appearing on a screen (10), wherein said software code or thread (60) is configured to render at least parts of a foreground window (41) transparent or at least partially transparent with respect to graphical elements and/or information (80, 82) contained behind said foreground window (41), and/or covered by said foreground window (41) on said screen, thereby rendering said graphical elements and/or information (80, 82) visible through said foreground window (41).

16. A computing device (20) configured to run software applications (30) and to display information accessible to said software applications in windows (41-42) appearing on a screen (10), wherein said computing device comprises and/or stores:
- a program code or thread (60) that is configured to render at least parts of a foreground window (41) transparent or at least partially transparent with respect to graphical elements and/or information (80, 82) contained behind said foreground window (41), and/or covered by said foreground window (41) on said screen, thereby rendering said graphical elements and/or information (80) visible through said foreground window (41).

17. A software application (30) configured to be run on a computing device (20) configured to display information accessible to said software applications in windows (41-42) appearing on said screen (10), wherein said software application is configured to run, activate and/or disactivate, preferably via a user input, the software code and/or thread of claim 16.

18. A software code or thread (60) configured to rendering the contents of an icon and/or window (41) displayed on a screen at least partially transparent, so as render visible the contents that is covered by said foreground window.
